# EUROPÄISCHE PATENTSCHRIFT

(11) **EP 2 702 344 B1**
(45) Veröffentlichungstag und Bekanntmachung des Hinweises auf die Patenterteilung: **21.01.2015**
(21) Anmeldenummer: 12721828.7
(22) Anmeldetag: 14.05.2012
(51) Int. Cl.: F27B 7/20, F27D 17/00, C04B 7/36, C04B 7/47, C04B 7/43

(54) **VERFAHREN UND VORRICHTUNG ZUM BRENNEN VON KLINKER**
METHOD AND DEVICE FOR THE FIRING OF CLINKER
PROCÉDÉ ET DISPOSITIF POUR RÉALISER LA COMBUSTION DE CLINKER

(30) Priorität: 27.05.2011 DE 102011050694; 10.08.2011 DE 102011052561
(43) Veröffentlichungstag der Anmeldung: 05.03.2014
(73) Patentinhaber: Südbayerisches Portlandzementwerk Gebr. Wiesbock & Co. GmbH, 83101 Rohrdorf (DE)
(72) Erfinder: LEIBINGER, Helmut, A-4910 Ried im Innkreis (AT)
(74) Vertreter: Lohr, Georg
(86) Internationale Anmeldenummer: PCT/EP2012/058942
(87) Internationale Veröffentlichungsnummer: WO 2012/163664

(56) Entgegenhaltungen:
- EP-A1- 0 492 133
- SUTOU K ET AL: "EIN NEUES CHLORID-BYPASS-SYSTEM MIT STABILER OFENFUEHRUNG UND STAUBVERWERTUNG NEW CHLORIDE BYPASS SYSTEM FOR STABLE KILN OPERATION AND RECYCLING OF WASTE UN NOUVEAU SYSTEME DE BY-PASS DU CHLORE AVEC CONDUITE STABLE DU FUOR ET VALORISATION DES POUSSIERES", ZKG INTERNATIONAL, BAUVERLAG BV., GETERSLOH, DE, Bd. 54, Nr. 3, 1. März 2001 (2001-03-01), Seiten 121-128, XP001043645, ISSN: 0949-0205 in der Anmeldung erwähnt

## Beschreibung

### Technisches Gebiet

Die Erfindung betrifft eine Vorrichtung bzw. ein Verfahren nach den Oberbegriffen der unabhängigen Ansprüche, insbesondere eine Vorrichtung zum Herstellen von Zementklinker, der auch als Klinker bezeichnet wird. Die Vorrichtung hat einen Ofen zum Brennen von Rohmehl zu Klinker und mindestens einen ersten Wärmetauscher zum Erhitzen eines Fluids, um es anschließend in mindestens einer Turbine zu entspannen.

### Stand der Technik

Klinker wird durch Brennen von Rohmehl in einem Ofen erzeugt. Dabei benötigt man eine Temperatur von etwa 1450°C. Zur Erzeugung dieser Temperatur werden Energieträger wie Kohle, Erdgas, Erdöl, Erdölprodukte (u.a. Kunststoffreste), Papier oder Holz oder sonstige Ersatzbrennstoffe in dem Ofen verbrannt.

In der Patentschrift CH 689 830 A5 wird die Herstellung von Klinker bei gleichzeitiger Stromerzeugung beschrieben. Dazu wird wie üblich vorgewärmtes Rohmehl in einem Drehrohrofen zu Klinker gebrannt. Dabei im Ofen entstehende Rauchgase werden aus dem Ofen abgezogen und die darin gespeicherte Wärme wird zunächst zum Vorwärmen von Rohmehl genutzt. Die dabei größenordnungsmäßig auf 600°C -1200°C abgekühlten Rauchgase werden anschließend einem Wärmetauscher zugeführt, um überhitzten Wasserdampf zu erzeugen, der dann in einer Turbine entspannt wird. Die Turbine treibt einen Generator an, so dass die bei der Entspannung frei werdende mechanische Leistung zumindest zum Teil als elektrische Leistung nutzbar gemacht wird.

Auch in der Offenlegungsschrift DE 25 58 722 wird eine Möglichkeit zur Umwandlung von in den Rauchgasen des Klinkerprozesses enthaltener Wärmeenergie in elektrische Energie beschrieben. Demnach werden die Rauchgase zur Rohmehlvorwärmung und zur Dampferzeugung genutzt. Die Rohmehlvorwärmung erfolgt wie üblich durch Zyklone. Zur Dampferzeugung ist ein Dampfkessel zwischen den Zyklonen im Rauchgasstrom angeordnet.

Das Rohmehl besteht in der Regel aus einer Mischung aus Kalkstein und Ton bzw. Mergel, oft auch mit Eisenerz und/oder Sand. Dadurch werden mit dem Rohmehl auch Chloride, Alkaliverbindungen und Schwefelverbindungen in den Ofen eingetragen. Diese Verunreinigungen verdampfen im Ofen, verlassen diesen mit dem Rauchgas und kondensieren dann im Rohmehlvorwärmer und an dem Rohmehl. Mit dem Rohmehl wird ein Teil der Verunreinigungen wieder in den Ofen eingebracht, wo sie wieder verdampfen und den Ofen mit dem Rauchgas verlassen, um anschließend erneut zu kondensieren. Dadurch reichern sich diese Verunreinigungen im Ofen und im Bereich des Rohmehlvorwärmers an. Das führt zu einer Verengung des Querschnitts der Rauchgasführung in dem Bereich, in dem die Verunreinigungen kondensieren. Diese Verunreinigungen werden deshalb üblicherweise durch ein Bypasssystem aus dem Rauchgas entfernt. Diese Bypasssysteme leiten einen Teil der staubhaltigen Ofenabgase vor dem Eintritt in den Rohmehlvorwärmer ab. Problematisch ist jedoch die Weiterverarbeitung des bei der Entstaubung der Bypassgase anfallenden Staubs. Man kann das Bypassgas zunächst z.B. in einem Zyklon grobentstauben, dann kühlen und anschließend in einem Gewebeabscheider feinentstauben. Der Grobstaub enthält nur wenig Chlorid und kann dem Ofen wieder zugeführt werden. Der Feinstaub hat einen hohen Chloridgehalt und kann in begrenztem Ausmaß ohne die Qualität des Zements zu beeinträchtigen dem Klinker z.B. beim Zementmahlprozess beigegeben werden (vgl. "Ein neues Chlorid-Bypass-System mit stabiler Ofenführung und Staubverwertung" von Sutou et al., ZKG International, Jg. 54, Nr. 3, 2001, Seiten 121-128). Problematisch an dieser Lösung ist jedoch, dass die Staubpartikel als Kondensationskeime benötigt werden und nach der Grobentstaubung diese Kondensationskeime nicht mehr in ausreichender Menge vorhanden sind.

EP 0 492 133 A1 offenbart eine Anlage zur Herstellung von Zementklinker, die, wie üblich, einen Drehrohrofen, einen Rohmehlvorwärmer sowie einen Chloridbypasszweig aufweist. Der Chloridbypasszweig ist über eine Leitung mit einem Boiler verbunden, um mittels des Boilers Dampf zu erzeugen. Der Dampf wird in einer Turbine entspannt, die einen Generator antreibt.

### Darstellung der Erfindung

Der Erfindung liegt die Aufgabe zugrunde, eine Vorrichtung und ein Verfahren zu entwickeln, die eine verbesserte Nutzung der beim Brennen von Klinker aus Rohmehl anfallenden Wärme ermöglichen.

Diese Aufgabe wird durch eine Vorrichtung bzw. durch ein Verfahren nach den unabhängigen Ansprüchen gelöst. Vorteilhafte Ausgestaltungen der Erfindung sind in den abhängigen Ansprüchen angegeben.

Die Vorrichtung zur Herstellung von Klinker, hat zumindest mindestens einen Ofen zum Brennen von Rohmehl zu Klinker. Der Ofen hat mit mindestens einen Auslass für Rauchgase, der mit mindestens einem Rohmehlvorwärmer derart verbunden ist, dass in den aus dem Auslass austretenden Rauchgasen gespeicherte Wärme im Rohmehlvorwärmer an das Rohmehl abgegeben wird. Das vorgewärmte Rohmehl kann dann dem Ofen zugeführt und dort zu Klinker gebrannt werden. Der Vorrichtung hat zudem mindestens einen Abzweig für Rauchgase, um einen Teil der Rauchgase zur Abscheidung von Verunreinigungen abzuzweigen, also einen sogenannten Bypassauslass. Der Bypassauslass kann beispielsweise am Ofen oder zwischen dem Ofen und dem Rohmehlvorwärmer angeordnet sein. Um in dem Rauchgas gespeicherte Wärme in elektrische Energie umzuwandeln hat die Vorrichtung mindestens einen ersten Wärmetauscher, in dem in dem Rauchgas gespeicherte Wärme an ein Fluid übertragen wird, so dass es anschließend in einer Turbine entspannt werden kann. Die Turbine treibt dann beispielsweise einen Generator an. Das Fluid kann also insbesondere Wasser bzw. Wasserdampf sein. Nach der Erfindung ist der erste Wärmetauscher vorzugsweise derart mit dem Abzweig, also dem Bypassauslass verbunden, dass dem Fluid Wärme des abgezweigten Teils der Rauchgase zugeführt wird. Dadurch wird die zur Dampferzeugung zur Verfügung stehende Wärmemenge pro Zeiteinheit erhöht.

Mit dem Begriff Wärme wird die thermische Energie Q= c(T, p, V) *m* T bezeichnet, die bei einer gegebenen Temperatur in einer Menge eines Stoffes gespeichert ist, wobei c(T,p,V) die spezifische Wärmekapazität, m die Masse und T die Temperatur beschreibt. V und p stehe wie üblich für Volumen bzw. Druck. Wärme kann z. B. in einem Wärmetauscher zum Teil an einem anderen Stoff mit kleiner Temperatur übertragen werden. Wärme kann von einem Stoff auf einen anderen Stoff übertragen werden und durch den Transport von Stoffen, z.B. durch einen Strom eines Fluids mit dem Strom transportiert werden. Bei solchen Prozessen bezeichnet der Begriff Wärme die in einem Zeitintervall übertragene bzw. transportierte thermische Energie.

Bevorzugt ist der Abzweig mit mindestens einer Mischkammer verbunden, um den abgezweigten Teil der Rauchgase mit Frischluft zu vermengen. Dadurch wird zwar die Temperatur des Rauchgases verringert, beispielsweise auf größenordnungsmäßig 450°C (sinnvoll insbesondere 300°- 500°C), jedoch kondensiert bei diesen Temperaturen das Chlorid an den Staubpartikeln und kann durch eine Rauchgasentstaubung aus abgeschieden werden, beispielsweise mittels keramischer oder elektrischer Filter. Dennoch ist diese Temperatur noch mehr als ausreichend, um in dem ersten Wärmetauscher effizient das Fluid mit dem abgezweigten, mit Frischluft vermischten und entstaubten Rauchgas zu erwärmen.

Deshalb hat die Mischkammer vorzugsweise einen Auslass, der mit einer Heißgasentstaubung, z.B. einem Keramikfilter, verbunden ist, um die mit der Frischluft vermengten und dadurch abgekühlten Rauchgase zu entstauben.

Wie schon beschrieben, hat die Heißgasentstaubung bevorzugt einen Auslass, der mit einem Einlass des ersten Wärmetauscher verbunden ist, um mit dem entstaubten Rauchgas das Fluid in dem ersten Wärmetauscher zu erwärmen, d.h. den entstaubten Rauchgasen wird Wärme zum Erzeugen des Dampfes entzogen. Der erste Wärmetauscher kann somit auch als Chlorid-Bypass-Boiler bezeichnet werden. Durch die vorherige Entstaubung wird die Funktion des Chlorid-Bypass-Boilers nicht durch Staub beeinträchtigt, der sich ansonsten an Wärmeaustauschflächen absetzen könnte und wegen abrasiver Eigenschaften die Lebensdauer der Bauteile des Chlorid-Bypass-Boilers verkürzt.

Das aus dem Chlorid-Bypass-Boiler austretende Rauchgas wird wieder dem Ofen zugeführt. Dadurch kann zum einen die in dem Rauchgase enthaltene Restwärme, also nicht an das Fluid übertragene Wärme genutzt werden, und zum anderen wird es dann der für Rauchgase üblichen Abgasbehandlung zugeführt, z.B. in einer SCR-Anlage entstickt. Entsprechend ist der Chlorid-Bypass-Boiler bevorzugt derart mit dem Ofen verbunden, dass aus dem Chlorid-Bypass-Boiler ausgetretenes Rauchgas wieder dem Ofensystem zugeführt wird.

Besonders bevorzugt wird das aus dem Chlorid-Bypass-Boiler austretende Rauchgas als Kühlmittel zum Kühlen von Klinker verwendet, wodurch es weiter erwärmt wird. Deshalb ist der Chlorid-Bypass-Boiler besonders bevorzugt derart mit einem Klinkerkühler verbunden, dass aus dem ersten Wärmetauscher ausgetretene Rauchgase über den Klinkerkühler in den Ofen als Sekundärluft eingeblasen werden. Dadurch kann die in dem Rauchgas nach dem Chlorid-Bypass-Boiler noch enthaltene Restwärme wieder in den Ofen eingespeist werden.

Besonders bevorzugt ist mindestens ein zweiter Wärmetauscher, z.B. ein Dampfkessel derart mit dem ersten Wärmetauscher verbunden, dass das Fluid nacheinander in den beiden Wärmetauschern erwärmt wird. Die dem Fluid zugeführte Wärmemenge und damit die beim Entspannen des Fluid frei werdende Energie (pro Zeiteinheit) kann dadurch weiter erhöht werde. Diese Lösung der serienschaltungsartigen Kopplung der beiden Wärmetauscher hat gegenüber einer Parallelführung zweier Fluide den Vorteil, dass nur eine Turbine benötigt wird. Zudem ist die erreichbare Energiedichte des Fluids bei der Serienschaltung größer, als bei einer Parallelschaltung der Wärmetauscher, wodurch ein kleinerer Volumenstrom in der Turbine entspannt werden muss.

Beispielsweise kann das Fluid, z.B. Wasser bzw. Wasserdampf (wird nachfolgend nicht mehr unterschieden), in einem der beiden Wärmetauscher zunächst auf eine erste Temperatur (T₁), z.B. größenordnungsmäßig 250°C (200°C-300°C), bei einem ersten Druck (p₁) erwärmt werden. Anschließend wird dem Fluid weitere Wärme zugeführt, um es z.B. auf eine zweite Temperatur (T₂), beispielsweise 400°C (300°C-500°C) bei einem zweiten Druck (p₂) zu erwärmen. Bevorzugt ist der erste Druck größer als der zweite Druck, d.h. p₁>p₂, dann wird die Einspeisung des Fluids in den nachgeschalteten Wärmetauscher vereinfacht. Der zweiten Wärmetauscher kann beispielsweise ein mit aus dem Rohmehlvorwärmer austretenden Rauchgasen erwärmter Dampfkessel sein.

Bevorzugt wird das Fluid, mit dem der erste bzw. zweite Wärmetauscher gespeist wird, in mindestens einem dritten Wärmetauscher vorgewärmt. Dadurch kann Wärme, die in Wärmeträgern gespeichert ist, die eine geringere Temperatur haben, als die aus dem Ofen bzw. dem Rohmehlvorwärmer austretenden Rauchgase, sinnvoll genutzt werden, d.h. die in dem Fluid gespeicherte Energie (pro Zeiteinheit) kann weiter erhöht werden. Beispielsweise kann in einem Klinkerkühler erwärmte Kühlluft, sogenannte Abluft als Wärmequelle dem dritten Wärmetauscher zugeführt werden. Ebenso können dem dritten Wärmetauscher entstickte Rauchgase zugeführt werden. Besonders bevorzugt ist der dritte Wärmetauscher zumindest zweistufig, wobei in einer der Stufen dem Fluid in entstickten Rauchgas gespeicherte Wärme und in einer anderen Stufe in Abluft des Klinkerkühlers gespeicherte Wärme zugeführt wird. Beispielsweise kann in einer ersten Stufe das Fluid von etwa 50°C (30°C- 80°C) mit der Wärme entstickter Rauchgase auf etwa 115°C (80°C- 150°C) erwärmt werden. In einer zweiten Stufe, die räumlich von der ersten Stufe getrennt sein kann, kann das Fluid dann auf etwa 200°C (150°C - 250°C) erwärmt werden. Bei der Vorwärmung steht das Fluid bevorzugt unter einem Druck von größenordnungsmäßig etwa 20 bis 30 bar. Bei diesem Druck und Temperaturen ist Wasser, ein geeignetes Fluid, noch flüssig. Dadurch kann die Speisefluidvorwärmung einfach von der Dampferzeugung unterschieden werden.

Die Erwärmung des Fluids in dem dritten Wärmetauscher erfolgt bei einem zumindest in etwas konstanten Druck p₃, der bevorzugt größer als die oben genannten Drücke p₁ und/oder p₂ ist, dadurch wird die Einspeisung des vorgewärmten Fluids in den ersten bzw. zweiten Wärmetauscher vereinfacht.

Die wichtigsten Verfahrensschritte nach der Erfindung lassen sich wie folgt zusammenfassen:
1. Brennen von Rohmehl zu Klinker in einem Ofen
2. Erwärmen von Rohmehl in einem Rohmehlvorwärmer mit aus dem Ofen austretenden Rauchgasen,
3. Abzweigen eines Teils der Rauchgase aus dem Ofen, um sie an dem Rohmehlvorwärmer vorbei zu leiten.
4. Erzeugen von Dampf mit beim Verbrennungsprozess im Ofen entstehender Wärme, wobei die Wärme zum Erzeugen des Dampfes den abgezweigten Rauchgasen entzogen wird.
5. Entspannen des Dampfes mittels mindestens einer Turbine.

Natürlich kann die Vorrichtung nach der Erfindung zur Umsetzung des Verfahrens verwendet werden.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
- Figur 1 zeigt:: Beispiel für ein Fließschema einer Vorrichtung zum Brennen von Klinker aus Rohmehl, und

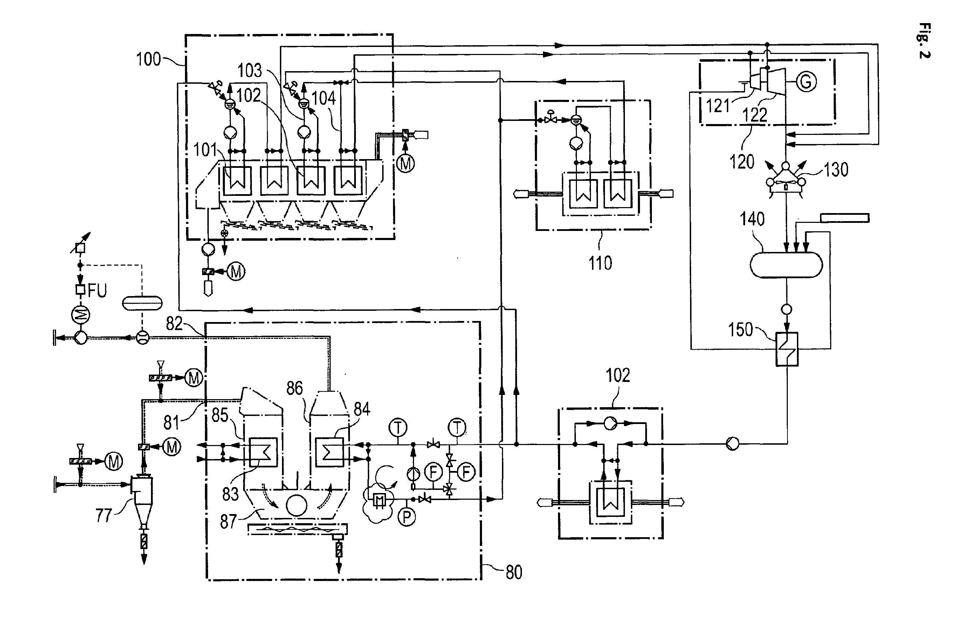

- Figur 2 zeigt:: Details des Fließschemas.

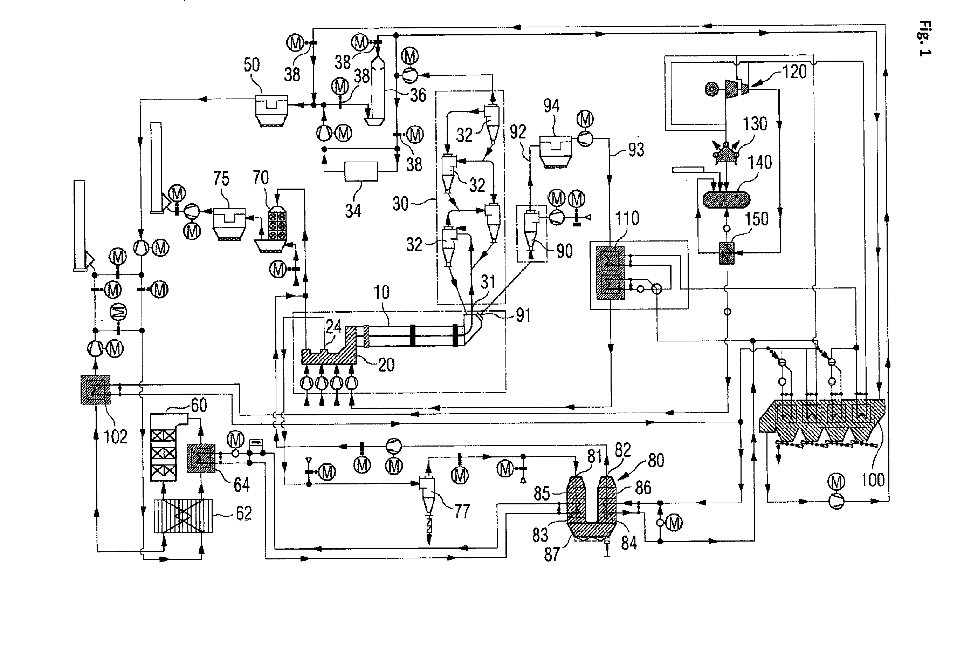

Kern der Vorrichtung nach Figur 1 ist ein Drehrohrofen 10 zwischen einem Klinkerkühler 20 und einem Wärmetauscherturm 30. Der Drehrohrofen 10 hat einen von der Seite des Klinkerkühlers aus in den Drehrohrofen 10 in diesen hineinragenden Brenner (nicht dargestellt), um die zur Erzeugung von Klinker benötigte Wärme durch Verbrennung in dem Drehrohrofen 10 zu erzeugen. Ein Hauptstrom der bei der Verbrennung entstehenden Rauchgase tritt wärmetauscherturmseitig aus einem Auslass 31 aus dem Drehrohrofen 10 aus. Der Auslass ist mit dem Wärmetauscherturm 30 als Beispiel für einen Rohmehlvorwärmer verbunden. Von dieser Seite wird im Gegenzug Rohmehl in den Drehrohrofen 10 eingebracht. Der Wärmetauscherturm 30 hat hier beispielhaft 4 kaskadiert miteinander verbundene, also in Reihe geschaltete Zyklone 32, zur Vorwärmung von Rohmehl durch Wärme des Rauchgases und zur Grobentstaubung des Rauchgases. Zusätzlich zu dem Auslass 31 hat der Ofen einen Abzweig 91 für Rauchgase, um einen Teil der Rauchgase zur Abscheidung von Verunreinigungen abzuzweigen. Der Abzweig ist somit der Anfang einer Bypassleitung, im gezeigten Beispiel eines Chlorid-Bypasses. Der abgezweigte Rauchgasstrom wird lediglich zur besseren Unterscheidbarkeit insbesondere vom Rauchgasshauptstrom auch als Rauchgasteilstrom oder Bypassstrom bezeichnet.

Der aus dem Wärmetauscherturm 30 austretende Rauchgashauptstrom hat eine typische Temperatur von etwa 250-550°C, meist von 300 bis 500°C. Bevor das Rauchgas einem Rauchgasfilter 50 zur weiteren Entstaubung zugeführt wird, wird es auf weniger als 150°C gekühlt. Dadurch wird zum einen das zu entstaubende Volumen (pro Zeiteinheit) drastisch reduziert und es kann kostengünstige Gewebefiltertechnik verwendet werden. Zudem kondensieren bei der Kühlung der Rauchgase auf weniger als 150°C in den Rauchgasen enthaltene Schwermetalle, wie z.B. Quecksilber oder Thallium an dem Staub und werden mit diesem beim Entstauben abgeschieden. Man kann den Rauchgasfilter 50 deshalb auch als Kältefalle bezeichnen. Zur Kühlung des Rauchgashaupstromes sind drei Möglichkeiten vorgesehen:
(i) Leitung des Rauchgashauptstroms zu einem Dampfkessel 100, um Dampf zu erzeugen der in einer Turbinenanordnung 120 entspannt wird, um z.B. einen Generator G anzutreiben,
(ii) Leitung des Rauchgashauptstroms zu einer Rohmehlmühle 34 zur Trocknung und Vorwärmung des Mahlgutes und
(iii) Leitung des Rauchgashauptstroms zu einem Verdampfungskühler 36.

In den entsprechenden Leitungen sind Ventile 38 vorgesehen, um den Rauchgasstrom auf die drei Möglichkeiten zur Kühlung aufzuteilen. Im normalen Betrieb sollte möglichst wenig, also kein oder fast kein Rauchgas mittels des Verdampfungskühlers 36 gekühlt werden, denn die dem Rauchgas im Verdampfungskühler 36 entzogene Wärme steht nicht mehr als Prozesswärme zur Verfügung. Der Verdampfungskühler hat somit bevorzugt nur die Funktion eines Notkühlers, falls der Dampfkessel 100 nicht genutzt werden kann.

Auch die in dem abgezweigten Rauchgasteilstrom enthaltene Wärme wird zur Dampferzeugung genutzt: Dazu ist der Abzweig 91 mit einer Mischkammer 90 verbunden, in der der Rauchgasteilstrom mit Frischluft vermengt wird. Dabei kondensiert Chlorid an in dem Rauchgasteilstrom enthaltenen Staubpartikeln. Die eingestellte Mischtemperatur beträgt größenordnungsmäßig 400°C (etwa 350°C-450°C) und erlaubt eine Entstaubung des Rauchgastteilstromes in einem Heißgasfilter 94. Der Auslass der Mischkammer ist folglich mit dem Einlass des Heißgasfilters 94 verbunden; dies ist durch eine Linie 92 angedeutet. Der entstaubte Rauchgasteilstrom wird dann einem Wärmetauscher 110, der nachfolgend auch als Chlorid-Bypass-Boiler 110 bezeichnet wird, zugeführt (angedeutet durch ein Verdichtersymbol und Verbindunglinie 93). In dem Chlorid-Bypass-Boiler 110 wird Wärme vom Rauchgasteilstrom auf Wasser übertragen, um Dampf zu erzeugen, dabei wird der Rauchgasteilstrom auf etwa 230°C abgekühlt. Der Chlorid-Bypass-Boiler 110 ist mit dem Klinkerkühler 20 verbunden, insbesondere mit dem Bereich des Klinkerkühlers 20, auf den aus dem Ofen 10 fallender Klinker abgelegt wird, um den Klinker mit dem Rauchgasteilstrom zu kühlen, wobei der Rauchgasteilstrom erhitzt wird. Der Rauchgasteilstrom wird über den Klinkerkühler 20 als Sekundärluft zurück in den Ofen 10 gespeist. Dadurch kann auf eine separate Rauchgasreinigung, z.B. Entstickung, für den Rauchgasteilstrom verzichtet werden. Zudem ist diese Wiedereinspeisung energetisch sinnvoll, weil die in dem Rauchgasteilstrom nach dem Verlassen des Chlorid-Bypass-Boilers 110 noch gespeicherte Wärme wieder dem Ofen zugeführt wird.

Der Rauchgashauptstrom wird entstaubt und entstickt. Dazu wird der Rauchgashauptstrom im Dampfkessel 100 auf etwa 170°C, bevorzugt auf weniger als 150°C abgekühlt. Bei dieser Temperatur kondensieren in Rauchgas enthaltene Schwermetalle an dem Staub und können mit dem Staub in dem nachgeschalteten Rauchgasfilter 50 abgeschieden werden. Der Rauchgasfilter 50 hat somit die Funktion einer Kältefalle für die Schwermetalle. Das entstaubte Rauchgas wird einer SCR-Anlage 60 zur katalytischen Entstickung der Rauchgase zugeführt. Dafür muss es auf mindestens 230°C erwärmt werden. Deshalb wird es vom Rauchgasfilter 50 kommend zunächst einem Rekuperator 62 zugeführt, dem im Gegenstrom Rauchgas zugeführt wird, welches zuvor in der SCR-Anlage 50 entstickt wurde, so dass Wärme von dem entstickten auf das zu entstickende Rauchgas übertragen wird. Das aus dem Rekuperator austretende, zu entstickenende Rauchgas wird einem weiteren Wärmetauscher 64 zugeführt, um es weiter zu erwärmen. Die zum Erwärmen des Rauchgases notwendige Wärme wird dem weiteren Wärmetauscher 64 über ein sogenanntes Thermoöl als Wärmeträgerfluid zugeführt. Das in dieser Weise in zwei Stufen (erste Stufe: Rekuperator 62; zweite Stufe: "zweiter Wärmetauscher 64") erwärmte Rauchgas wird der SCR-Anlage 60 zugeführt und dort entstickt.

Das entstickte Rauchgas erwärmt im Rekuperator 62 wie schon beschrieben die noch zu entstickenden Rauchgase und wird entsprechend abgekühlt. Anschließend wird das Rauchgas in einem weiteren Wärmetauscher 102 auf bevorzugt etwa 110°C abgekühlt und kann wie angedeutet über einen Kamin abgeführt werden. Die dem Rauchgas in dem Wärmetauscher 102 entzogene Wärme dient zur Speisewasservorwärmung für den Dampfkessel 100 und/oder den Chlorid-Bypass-Boiler 110.

Zudem wird mit der bevorzugt kontinuierlichen Entnahme von Klinker aus dem Drehrohrofen 10 Wärme aus dem Drehrohrofen 10 abgeführt. Dieser zunächst etwa 1450°C heiße Klinker wird in dem Klinkerkühler 20 gekühlt. Als Kühlmittel dient bevorzugt Luft, im einfachsten Fall Umgebungsluft. Der Klinkerkühler 20 ist somit ein Wärmetauscher. Ein Teil der in dem Klinkerkühler 20 erwärmten Luft wird über einen sogenannten Mittenluftabgriff 24 aus dem Klinkerkühler abgeführt. Mit in der abgeführten Luft, nachfolgend kurz Abluft genannt, gespeicherter Wärme wird nach einer Grobentstaubung durch einen Zyklon 77 in einem Wärmetauscher 80 das Thermoöl als Wärmeträgerfluid erwärmt. Die an das Wärmeträgerfluid übertragene Wärme kann auch über weite Strecken mit nur geringen Wärmeverlusten transportiert werden, insbesondere um in dem zweiten Wärmetauscher 64 das zu entstickende Rauchgas auf die für die Entstickung notwendige Temperatur zu erwärmen.

Der Wärmetauscher 80 hat einen Einlass 81 für die Abluft, die im Wärmetauscher 80 zunächst über eine erste Leitung 83 geleitet wird, um das Wärmeträgerfluid, welches durch die erste Leitung 83 strömt, zu erwärmen. Nachrangig zu der ersten Leitung 83 ist eine zweite Leitung 84 angeordnet, über die die Abluft geleitet wird. In der zweiten Leitung 84 strömt ein weiteres Wärmeträgerfluid und wird durch die Abluft erwärmt. Im gezeigten Beispiel ist das weitere Wärmeträgerfluid Wasser, das als Speisewasser für den Dampfkessel 100 und/oder einen Boiler 110 vorgewärmt wird. Die Abluft verlässt den Wärmetauscher 80 über einen Auslass 82. Die Abluft wird im Wärmetauscher 80 in einem Strömungskanal geführt. Der Strömungskanal ist beispielhaft U-förmig, d.h. er hat zwei freie Schenkel 85, 86, die durch einen untenliegenden Querschenkel 87 miteinander verbunden sind. In jedem der beiden freien Schenkel 85, 86 ist je eine der beiden Leitungen 83, 84. Durch die Umlenkung der Abluft im Bereich des Querschenkels 87 sammelt sich am Boden des Querschenkels von der Abluft mitgetragener Klinkerstaub, der dort abgeschieden werden kann.

Der Auslass 82 ist mit einem weiteren Wärmetauscher verbunden, um die Temperatur in dem nachgeschalteten Rauchgasfilter 75 zu kontrollieren. Die gefilterte Abluft wird über einen angedeuteten Kamin abgegeben.

Die Dampferzeugung erfolgt in mehreren Stufen. Das Speisewasser wird im Wesentlichen durch Kondensation von zuvor in der Turbinenanordnung 120 entspanntem Dampf gewonnen. Dazu sind verschiedene Kondensatoren 130, 140, 150 vorgesehen. Verluste werden mit bevorzugt demineralisiertem Wasser ausgeglichen. Das Speisewasser hat am Auslauf des Kondensators 150 etwa 55°C und wird von dort entnommen und mit einer Pumpe zu dem weiteren Wärmetauscher 102 gefördert. Dort wird es in einer ersten Stufe mit Wärme des entstickten Rauchgashauptstromes auf etwa 135°C (100°C-150°C) erhitzt. Dabei wird ein Teil des Speisewassers, nachdem es aus dem Wärmetauscher ausgetreten ist, rückgeführt, so dass sich am Speisewassereinlass des Wärmetauschers 102 eine Temperatur von etwa 110°C (>100°C bis 150°C) einstellt. Somit hat auch das aus dem Wärmetauscher 102 austretende Rauchgas eine Temperatur von mindestens etwa 110°C (100°C bis 150°C) und eine Kondensation von im Rauchgashauptstrom enthaltenem Wasser wird vermieden. Diese Temperatur ist bevorzugt so gering als möglich zu wählen, aber so hoch, dass auch im sich an den Wärmetauscher 102 anschließenden Kamin kein oder nur sehr wenig Kondensat bildet.

Ein Teil des im Wärmetauscher 102 vorgewärmten Speisewassers wird unmittelbar dem Dampfkessel 100 zugeführt. Der verbleibende Teil des im Wärmetauscher 102 vorgewärmten Speisewassers wird in der zweiten Leitung 84 des Wärmetauschers 80 durch die Abluft des Klinkerkühlers weiter erwärmt, z.B. auf etwa 200°C (150°C -250°C). Dieser Teil des Speisewassers wird zum Teil ebenfalls in den Dampfkessel 100 und zum verbleibenden Teil in den Chlorid-Bypass-Boiler 110 eingespeist.

Der im Dampfkessel 100 und im Chlorid-Bypass-Boiler 110 aus dem Speisewasser erzeugte Dampf wird dann der Turbinenanordnung 120 zugeführt. Dazu hat der Dampfkessel 100 zwei Leitungssysteme 101, 102. Das erste 101 der beiden Leitungssysteme dient zur Erzeugung von Dampf unter vergleichsweise geringem Druck und vergleichsweise geringer Temperatur, z.B. etwa 200°C (150° -250°C) bei etwa 4 bar (2-6 bar). Dieses erste Leitungssystem 101 ist im Rauchgashauptstrom dem zweiten Leitungssystem 102 nachgeordnet und wird mit vom Wärmetauscher 102 vorgewärmten Speisewasser gespeist. Das zweite Leitungssystem dient deshalb zur Erzeugung von Wasserdampf mit wesentlich höherer Temperatur, z.B. etwa 400°C (300°C oder mehr) bei z.B. etwa 15 bar (10-30 bar), bevorzugt überhitztem Dampf. Es wird mit Speisewasser, das vom Wärmetauscher 80 kommt, wie folgt gespeist: Ein erster Teil des von Wärmetauscher 80 kommenden Speisewassers wird in einem ersten Abschnitt 103 der zweiten Leitung 102 des Dampfkessels 100 erwärmt. Der andere Teil des von Wärmetauscher 80 kommenden Speisewassers wird in dem Chlorid-Bypass-Boiler 110 auf etwa 250°C (200°C bis 300°C) bei etwa 10-30 bar erwärmt. Die beiden so erwärmten Teile des von Wärmetauscher 80 kommenden Speisewassers werden dann in einem sich an den ersten Abschnitt 103 anschließenden Abschnitt 104 der zweiten Leitung 102 des Dampfkessels 100 auf die Endtemperatur von etwa 400°C bei etwa 10-30 bar erwärmt. Vom Dampfkessel 100 führen folglich zwei Dampfströme zu der Turbinenanordnung, ein erster, der in der ersten Leitung 101 vom Rauchgashauptstrom erwärmt wurde und ein zweiter, der in der zweiten Leitung 102 im Zusammenwirken mit dem Chlorid-Bybass-Boiler110 erwärmt wurde. Der erste Dampfstrom hat im Vergleich zum zweiten Dampfstrom eine geringere Temperatur und einen geringeren Druck. Diese beiden Dampfströme werden dann in der entsprechend zweistufig ausgebildeten Turbinenanordnung 120 entspannt. Der zweite Dampfstrom wird zunächst in einer ersten Turbinenstufe 121 auf etwa den Druck des ersten Dampfstroms entspannt. Die beiden Dampfströme werden anschließend gemeinsam in einer zweiten Turbinenstufe 122 entspannt. Der entspannte Dampf wird anschließend in mehreren Kondensatoren 130, 140, 150 kondensiert. Das so gewonnene Wasser kann wieder der Speisewasservorwärmung durch die Wärmetauscher 102 und 80 zugeführt werden.

### Bezugszeichenliste

- 10: Ofen, hier als Drehrohrofen
- 20: Klinkerkühler
- 24: Mittenluftabgriff
- 30: Wärmetauscherturm
- 31: Auslass für Rauchgashauptstrom
- 32: Zyklon
- 34: Rohmehlmühle
- 36: Verdampfungskühler
- 38: Ventil
- 50: Rauchgasfilter zur Entstaubung
- 60: SCR-Anlage
- 62: Rekuperator / Wärmetauscher
- 64: (zweiter) Wärmetauscher
- 70: Kältefalle/Kühler
- 75: Rauchgasfilter zur Entstaubung
- 77: Zyklon zu Grobstaubabscheidung
- 80: Wärmetauscher
- 81: Einlass Abluft
- 82: Auslass Abluft
- 83: erste Leitung für Wärmeträgerfluid
- 84: zweite Leitung für Wärmeträgerfluid
- 85: freier Schenkel
- 86: freier Schenkel
- 87: Querschenkel
- 90: Mischkammer
- 91: Abzweig für Rauchgasteilstrom
- 92: Verbindung
- 93: Verbindung
- 94: Heißgasentstaubung
- 100: Abhitzekessel/Dampfkessel
- 101: erste Leitung
- 102: zweite Leitung
- 103: erster Abschnitt der ersten Leitung
- 104: zweiter Abschnitt der zweiten Leitung
- 102: Wärmetauscher zur Speisewasservorwärmung
- 110: Boiler zur Dampfgewinnung
- 120: Turbinenanordnung
- 121: erste Turbinenstufe
- 122: zweite Turbinenstufe
- 130: Kondensator I
- 140: Kondensator II
- 150: Kondensator III

## Patentansprüche

1. Vorrichtung zur Herstellung von Klinker, zumindest aufweisend:
- mindestens einen Ofen (10) zum Brennen von Rohmehl zu Klinker mit mindestens einem Auslass (31) für Rauchgase und mit mindestens einem Abzweig (91) für Rauchgase, um einen Teil der Rauchgase zur Abscheidung von Verunreinigungen abzuzweigen,
- mindestens einen Rohmehlvorwärmer (30), der derart mit dem Auslass (31) verbunden ist, dass in den Rohmehlvorwärmer (30) aus dem Auslass (31) austretende Rauchgase eintreten, um Rohmehl zu erwärmen, und
- mindestens einen ersten Wärmetauscher (110), um mit beim Verbrennungsprozess im Ofen (10) entstehender Wärme ein Fluid unter Druck zu setzen, um es anschließend in mindestens einer Turbine (120) zu expandieren, wobei der erste Wärmetauscher (110) derart mit dem Abzweig (91) verbunden ist, dass dem Fluid Wärme des abgezweigten Teils der Rauchgase zugeführt wird,
**dadurch gekennzeichnet, dass** der erste Wärmetauscher (110) derart mit dem Ofen (10) verbunden ist, dass aus dem ersten Wärmetauscher (110) ausgetretenes Rauchgas dem Ofen (10) zugeführt wird.

2. Vorrichtung nach Anspruch 1,
**dadurch gekennzeichnet, dass**
der Abzweig (91) mit mindestens einer Mischkammer (90) verbunden ist, um den abgezweigten Teil der Rauchgase mit Frischluft zu mischen.

3. Vorrichtung nach Anspruch 2,
**dadurch gekennzeichnet, dass**
die Mischkammer (90) einen Auslass hat, der mit einer Heißgasentstaubung verbunden ist.

4. Vorrichtung nach Anspruch 3,
**dadurch gekennzeichnet, dass**
die Heißgasentstaubung einen Auslass hat, der mit einem Einlass des ersten Wärmetauscher (110) verbunden ist.

5. Vorrichtung nach einem der Ansprüche 1 bis 2,
**dadurch gekennzeichnet, dass**
der erste Wärmetauscher (110) derart mit einem Klinkerkühler (20) verbunden ist, dass aus dem ersten Wärmetauscher (110) ausgetretenes Rauchgas über den Klinkerkühler (20) in den Ofen (10) eingeblasen wird.

6. Verfahren zur Herstellung von Klinker, zumindest aufweisend die Schritte:
- Brennen von Rohmehl zu Klinker in einem Ofen (10)
- Erwärmen von Rohmehl in einem Rohmehlvorwärmer (30) mit aus dem Ofen (10) austretenden Rauchgasen,
- Abzweigen eines Teils der Rauchgase, um sie am den Rohmehlvorwärmer (30) vorbei zu leiten
- Erzeugen von Dampf mit beim Verbrennungsprozess im Ofen (10) entstehender Wärme, wobei die Wärme zum Erzeugen des Dampfes den abgezweigten Rauchgasen entzogen wird,
- Entspannen des Dampfes mittels mindestens einer Turbine (120),
**dadurch gekennzeichnet, dass**
die abgezweigten Rauchgase dem Ofen zugeführt werden.

7. Verfahren nach Anspruch 6,
**dadurch gekennzeichnet, dass**
die abgezweigten Rauchgase mit Frischluft vermengt werden.

8. Verfahren nach Anspruch 7,
**dadurch gekennzeichnet, dass**
die mit der Frischluft vermengten Rauchgase entstaubt werden.

9. Verfahren nach Anspruch 8,
**dadurch gekennzeichnet, dass**
den entstaubten Rauchgasen die Wärme zum Erzeugen des Dampfes entzogen wird.

10. Verfahren nach einem der Ansprüche 6 bis 9,
**dadurch gekennzeichnet, dass**
die abgezweigten Rauchgase zunächst abgekühlt und entstaubt werden, anschließend als Kühlmittel für Klinker in einem Klinkerkühler vorgewärmt werden und anschließend dem Ofen zugeführt werden.

## Claims

1. Device for producing clinker, at least comprising:
- at least one kiln (10) for combusting raw meal to clinker, with at least one outlet (31) for flue gases and with at least one branch (91) for flue gases, for branching off a part of the flue gases for removal of impurities,
- at least on raw meal pre-warmer (30) which is connected with the outlet (31) such that flue gases from the outlet (31) enter the raw meal pre-warmer (30) in order to heat raw meal, and
- at least one first heat exchanger (110) to pressurize a fluid by means of heat generated in the combustion process in the kiln (10), for expanding the fluid subsequently in at least one turbine (120), wherein the first heat exchanger (110) is connected to the branch (91) such that heat of the branched-off part of the flue gases is provided to the fluid,
**characterized in that**
the first heat exchanger (110) is connected to the kiln (10) such that flue gas exiting the first heat exchanger (110) is provided to the kiln (10).

2. Device according to claim 1,
**characterized in that**
the branch (91) is connected to at least one mixing chamber (90) for mixing the part of the flue gases being branched-off with fresh air.

3. Device according to claim 2,
**characterized in that**
the mixing chamber (90) has an outlet which is connected to the device for hot gas dust-removal.

4. Device according to claim 3,
**characterized in that**
the hot gas dust-removal has an outlet which is connected to an inlet of the first heat exchanger (110).

5. Device according to one of claims 1 to 2,
**characterized in that**
the first heat exchanger (110) is connected to the clinker cooler (20) such that flue gas exiting the first heat exchanger (110) is injected into the kiln (10) via the clinker cooler (20).

6. Method for producing clinker, at least comprising the following steps:
- combustion of raw meal to clinker in a kiln (10)
- warming of raw meal in a raw meal pre-warmer (30) by means of flue gases exiting the kiln (10),
- branching off a part of the flue gases, for bypassing the raw meal pre-warmer (30),
- generating steam by means of heat generated during the combustion process in the kiln (10), wherein the heat for generating the steam is extracted from the branched-off flue gases,
- expanding of steam by means of at least one turbine (120),
**characterized in that**
the branched-off flue gases are provided to the kiln.

7. Method according to claim 6,
**characterized in that**
the branched-off flue gases are mixed with fresh air.

8. Method according to claim 7,
**characterized in that**
the branched-off flue gases mixed with fresh air are cleaned from dust.

9. Method according to claim 8,
**characterized in that**
heat for generating steam is extracted from the flues gases which are cleaned from dust.

10. Method according to one of claims 6 to 9,
**characterized in that**
the branched-off flue gases are first cooled and cleaned from dust, subsequently are prewarmed as coolant for clinker, and subsequently are provided to the kiln.

## Revendications

1. Dispositif pour la fabrication de clinker, comprenant :
- au moins un four (10) pour calciner de la farine crue en clinker, avec au moins une sortie (31) pour les gaz brûlés et au moins une dérivation (91) pour les gaz brûlés afin de dériver une partie des gaz brûlés pour séparer les impuretés,
- au moins un préchauffeur de farine crue (30) qui communique avec la sortie (31) de telle manière que des gaz brûlés sortant par la sortie (31) entrent dans le préchauffeur de farine crue (30) pour chauffer la farine crue, et
- au moins un premier échangeur de chaleur (110) pour mettre un fluide sous pression avec la chaleur produite lors du processus de combustion dans le four (10) pour l'expanser ensuite dans au moins une turbine (120), le premier échangeur de chaleur (110) communiquant avec la dérivation (91) de telle façon que de la chaleur de la partie dérivée des gaz brûlés est amenée au fluide, **caractérisé en ce que** le premier échangeur de chaleur (110) communique avec le four (10) de telle façon que des gaz brûlés sortant du premier échangeur de chaleur (110) sont amenés au four (10).

2. Dispositif selon la revendication 1, **caractérisé en ce que** la dérivation (91) communique avec au moins une chambre de mélange (90) pour mélanger la partie dérivée des gaz brûlés avec de l'air frais.

3. Dispositif selon la revendication 2, **caractérisé en ce que** la chambre de mélange (90) possède une sortie qui est reliée à un dépoussiérage des gaz chauds.

4. Dispositif selon la revendication 3, **caractérisé en ce que** le dépoussiérage des gaz chauds possède une sortie qui communique avec une entrée du premier échangeur de chaleur (110).

5. Dispositif selon l'une des revendications 1 à 2, **caractérisé en ce que** le premier échangeur de chaleur (110) communique avec un refroidisseur de clinker (20) de telle manière que des gaz brûlés sortant du premier échangeur de chaleur (110) sont injectés dans le four (10) en passant par le refroidisseur de clinker (20).

6. Procédé pour la fabrication de clinker, comprenant au moins les étapes de :
- calcination de farine crue dans un four (10) pour obtenir du clinker,
- chauffage de la farine crue dans un préchauffeur de farine crue (30) avec des gaz brûlés sortant du four (10),
- dérivation d'une partie des gaz brûlés pour leur faire contourner le préchauffeur de farine crue (30),
- génération de vapeur avec la chaleur produite lors d'un processus de combustion dans le four (10), la chaleur nécessaire à la génération de vapeur étant prélevée sur les gaz brûlés dérivés,
- détente de la vapeur au moyen d'au moins une turbine (120),
**caractérisé en ce que** les gaz brûlés dérivés sont amenés au four.

7. Procédé selon la revendication 6, **caractérisé en ce que** les gaz brûlés dérivés sont mélangés avec de l'air frais.

8. Procédé selon la revendication 7, **caractérisé en ce que** les gaz brûlés mélangés avec l'air frais sont dépoussiérés.

9. Procédé selon la revendication 8, **caractérisé en ce que** la chaleur nécessaire à la génération de vapeur est prélevée sur les gaz brûlés dépoussiérés.

10. Procédé selon l'une des revendications 6 à 9, **caractérisé en ce que** les gaz brûlés dérivés sont d'abord refroidis et dépoussiérés, puis préchauffés en servant de réfrigérant pour le clinker dans un refroidisseur de clinker et enfin amenés au four.
